# EUROPÄISCHE PATENTSCHRIFT

(11) **EP 0 563 634 B1**
(45) Veröffentlichungstag und Bekanntmachung des Hinweises auf die Patenterteilung: **11.12.1996**
(21) Anmeldenummer: 93103805.3
(22) Anmeldetag: 10.03.1993
(51) Int. Cl.: B60R 13/00

(54) **Haltevorrichtung für eine Kfz-Kühlerfigur**
Hood ornament holding device for an automotive vehicle
Dispositif de retenue d'une garniture de radiateur pour un véhicule automobile

(30) Priorität: 31.03.1992 DE 4210515
(43) Veröffentlichungstag der Anmeldung: 06.10.1993
(73) Patentinhaber: FRIEDR. FINGSCHEIDT GmbH, D-42551 Velbert (DE)
(72) Erfinder: Linnenbrink, Jörg, W-5600 Wuppertal 11 (DE)
(74) Vertreter: Zapf, Christoph, Dipl.-Ing.

(56) Entgegenhaltungen:
- DE-U- 9 007 030
- FR-A- 2 311 692
- US-A- 4 988 065
- US-A- 5 073 417

## Beschreibung

Die vorliegende Erfindung betrifft eine Haltevorrichtung mit einer Kühlerfigur zur Montage in einer Montageöffnung eines Karosserieblechteils, bestehend aus einem in die Montageöffnung einsetzbaren Sockelteil, einem innerhalb des Sockelteils angeordneten Lager mit einer gelenkpfannenartigen, konkaven Lagerfläche, sowie aus einer mit der Kühlerfigur verbundenen, gelenkig mit einer konvexen Lagerfläche in der Lagerfläche des Lagers sitzenden und durch Federkraft in dem Lager gehaltenen Lagerkugel, wobei zur Gewährleistung einer Vorzugsstellung der Kühlerfigur die Lagerkugel und das Lager im Bereich ihrer Lagerflächen Rastmittel aufweisen, die zumindest aus einem Rastnocken der einen Lagerfläche und einer mit dem Rastnocken zusammenwirkenden Rastvertiefung der anderen Lagerfläche bestehen, wobei der Rastnocken und die Rastvertiefung mittig zu einer - bezogen auf die Einbaulage des Sockelteils in einem Fahrzeug - in Fahrzeuglängsrichtung und vertikal verlaufenden Längsmittelebene angeordnet sind.

Bei sogenannten Kühlerfiguren, die insbesondere im Frontbereich mancher Kraftfahrzeuge angeordnet sind, besteht aus Gründen der Sicherheit die Anforderung, daß die Figur, die ja von der Karosserie absteht, beliebig verschwenkbar gelagert sein muß, um bei eventuellen Kollisionen mit Personen Verletzungen möglichst zu vermeiden.

Zu diesem Zweck ist aus dem DE-GM 90 07 030 eine gattungsgemäße Haltevorrichtung bekannt. Hierbei ist die Figur, bei der es sich um einen von einem Kreisring umschlossenen, dreistrahligen Stern handelt, über ihre spezielle Lagerung aus einer durch Rastmittel definierten Grund- bzw. Vorzugsstellung heraus in beliebigen Richtungen verschwenkbar bzw. kippbar, und zusätzlich kann die Figur auch zusammen mit der Schwenklagerung gegen eine das Lager beaufschlagende Federkraft in die Haltevorrichtung bzw. das Sockelteil eingedrückt werden. Hinsichtlich dieser Sicherheitsfunktionen hat sich die bekannte Haltevorrichtung im wesentlichen gut bewährt.

Nun hat sich aber bei der bekannten Haltevorrichtung herausgestellt, daß die Figur schon bei sehr geringen Kippkräften kippt. Vor allem bei der besonders wichtigen Kippbewegung nach hinten - bezogen auf die Fahrtrichtung eines Fahrzeugs - ist die hierfür erforderliche Kippkraft relativ gering, wobei zudem die Kippkraft auch mit der Zeit, d. h. nach mehrmaligem Kippen aus der Vorzugsstellung heraus, erheblich nachläßt, so daß die Kühlerfigur dann nur noch unzureichend in der Vorzugsstellung fixiert ist. Ferner kann es während des Kippens auch zu einem Verdrehen der Kühlerfigur kommen, wodurch diese in derart ungünstiger Weise auf das Fahrzeug-Karosserieteil (z. B. Motorhaube) auftreffen kann, daß Lackierungsbeschädigungen verursacht werden.

Der vorliegenden Erfindung liegt daher die Aufgabe zugrunde, die bekannte Haltevorrichtung im Bereich der die Vorzugsstellung definierenden Rastmittel so zu verbessern, daß die zum Kippen der Kühlerfigur erforderliche Kippkraft vergrößert wird und auch bei wiederholtem Kippen möglichst konstant bleibt. Zudem soll vorzugsweise auch bei einem Kippen der Kühlerfigur nach hinten (bezogen auf die Fahrtrichtung eines Fahrzeugs) einem gleichzeitigen Verdrehen entgegengewirkt werden, um Lackbeschädigungen am Fahrzeug zu vermeiden.

Erfindungsgemäß wird dies dadurch erreicht, daß der Rastnocken und die Rastvertiefung im in Fahrtrichtung des Fahrzeugs weisenden, vorderen Bereich des Lagers und der Lagerkugel angeordnet sind, wobei der Rastnocken von der Lagerfläche der Lagerkugel vorspringt und die Rastvertiefung in der Lagerfläche des Lagers gebildet ist, und wobei die Rastvertiefung beidseitig der Längsmittelebene einander gegenüberliegende Führungsflächen für den Rastnocken derart aufweist, daß während eines Verschwenkens der Kühlerfigur entgegen der Fahrtrichtung nach hinten einem gleichzeitigen Verdrehen der Kühlerfigur entgegengewirkt wird. Durch diese vorteilhafte Ausgestaltung wird der Rastnocken über die Führungsflächen der Rastvertiefung während eines Verschwenkens der Kühlerfigur derart geführt, daß ein gleichzeitiges Verdrehen vorteilhafterweise nahezu ausgeschlossen ist. Die Rastvertiefung geht in ihrem oberen Bereich über eine quer zur Längsmittelebene verlaufende Rastkante in die konkave Lagerfläche über. Mit dieser Rastkante wirkt der Rastnocken der Lagerkugel beim Kippen so zusammen, daß der Rastnocken die Rastkante erst ab einer bestimmten, gegenüber dem Stand der Technik erhöhten Kippkraft "überwinden" kann. Das Ende des Rastnockens ist hierbei vorzugsweise mit einem bestimmten Radius abgerundet, so daß erfindungsgemäß über den Radius dieser Abrundung und/oder über die Kontur der erwähnten Rastkante die jeweils gewünschte bzw. geforderte Kippkraft eingestellt werden kann.

Ein zusätzlicher positiver Effekt besteht darin, daß durch die erfindungsgemäße Ausgestaltung auch ein "Aushebeln" der Kühlerfigur aus der Haltevorrichtung wesentlich erschwert wird, was einen wirksamen Schutz gegen Diebstahl der Kühlerfigur darstellt.

Im Zusammenhang mit dem erfindungsgemäßen Rastnocken und der damit zusammenwirkenden Rastvertiefung ist es von besonderem Vorteil, das Lager und/oder die Lagerkugel aus einem elastisch verformbaren Kunststoff herzustellen. Vorzugsweise besteht die mit der Kühlerfigur verbundene Lagerkugel aus Metall, während vorteilhafterweise das die konkave Lagerfläche und damit auch die erfindungsgemäße Rastvertiefung mit der oben erwähnten Rastkante aufweisende Lager aus einem elastisch verformbaren Kunststoff besteht. Dies trägt dazu bei, die Kippkraft sehr konstant halten zu können. Beträgt beispielsweise die anfängliche Kippkraft 30 N, so gewährleistet die erfindungsgemäße Haltevorrichtung auch nach 50-maligem Kippen der Kühlerfigur noch eine Kippkraft von etwa 18 bis 20 N, was jedenfalls ausreichend ist.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels wird im folgenden die Erfindung näher erläutert. Dabei zeigen:
- Fig. 1: eine Axialschnittdarstellung einer erfindungsgemäßen Haltevorrichtung in einem noch nicht arretierten Zustand, d.h. in Lösestellung, eines Arretierteils,
- Fig. 2: eine Ansicht auf die Kühlerfigur in Pfeilrichtung II gemäß Fig. 1,
- Fig. 3: eine gegenüber Fig. 2 vergrößerte Ansicht eines Fußes der Kühlerfigur in Pfeilrichtung III gemäß Fig. 2,
- Fig. 4 und 5: zwei Einzelteile der erfindungsgemäßen Haltevorrichtung, und zwar eine Lagerkugel (Fig. 4) und ein Lager (Fig. 5), jeweils im Axialschnitt durch die gleiche Schnittebene wie in Fig. 1, jedoch in vergrößertem Maßstab,
- Fig. 6 und 7: die in den Fig. 4 und 5 dargestellten Einzelteile jeweils im Axialschnitt längs der Schnittlinie VI-VI in Fig. 4 bzw. längs der Schnittlinie VII-VII in Fig. 5 und
- Fig. 8: eine Draufsicht des Lagers in Pfeilrichtung VIII gemäß Fig. 7.

In den verschiedenen Figuren der Zeichnung sind gleiche bzw. gleichwirkende Teile und Komponenten stets mit den gleichen Bezugsziffern bezeichnet.

Bevor auf die eigentliche Erfindung eingegangen wird, soll zunächst der konstruktive, im wesentlichen aus dem DE-GM 90 07 030 an sich bekannte Aufbau erläutert werden.

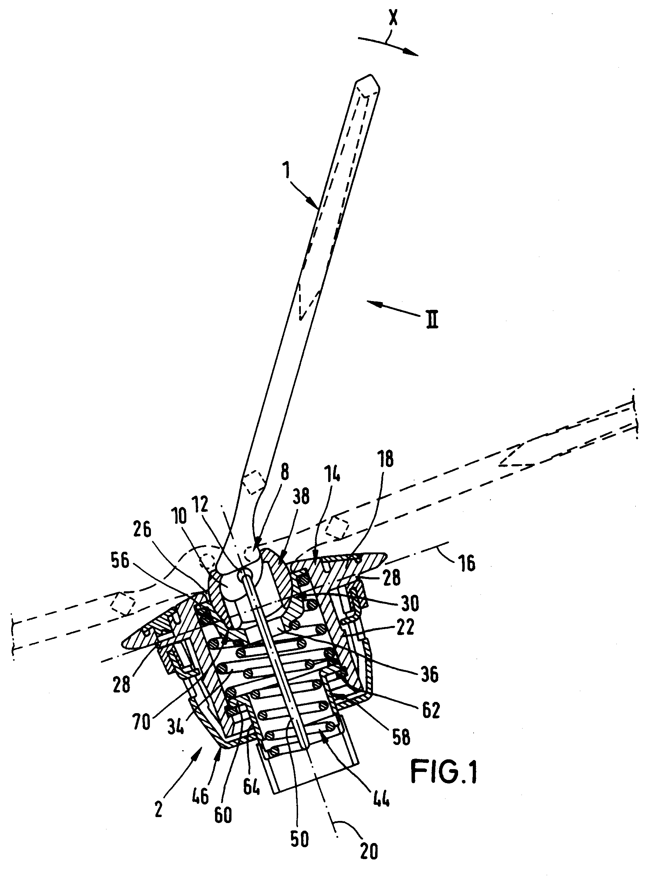

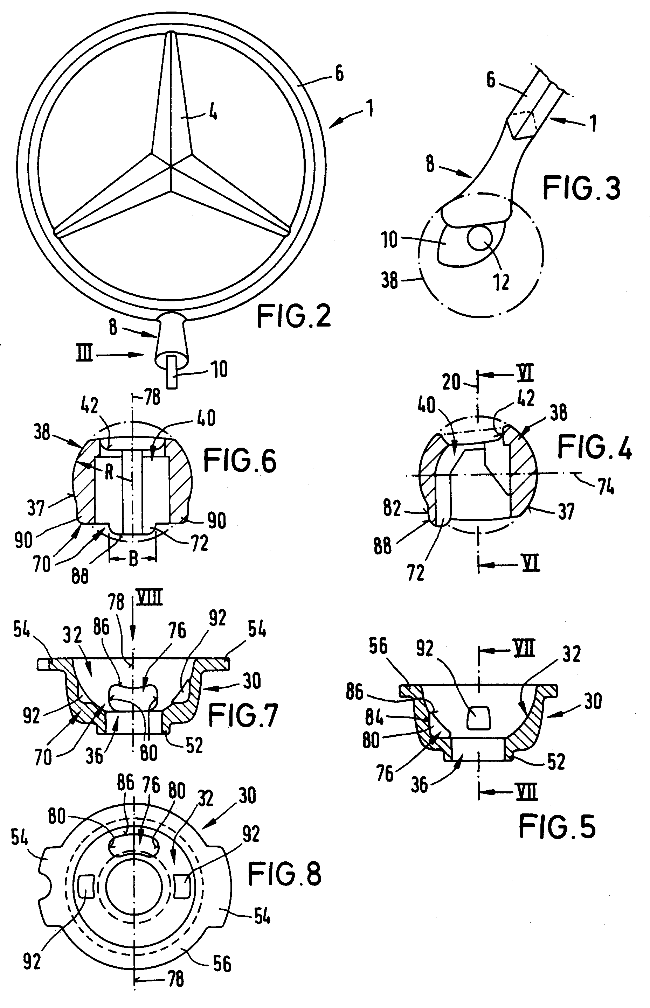

Wie in Fig. 1 zu erkennen ist, ist eine Kühlerfigur 1 schwenkbeweglich (siehe den Pfeil X) in einer erfindungsgemäßen Haltevorrichtung 2 gelagert. Bei der Kühlerfigur 1 kann es sich um beliebige Figuren handeln; wie insbesondere der Fig. 2 zu entnehmen ist, handelt es sich in dem dargestellten Ausführungsbeispiel um eine geometrische Figur aus einem dreistrahligen Stern 4, der von einem Kreisring 6 umschlossen ist. Von dem Kreisring 6 erstreckt sich ein Figurenfuß 8 radial nach außen (nach unten), der eine sich etwa axial nach unten erstreckende Haltelasche 10 mit einer Queröffnung 12 aufweist (siehe hierzu auch Fig. 3).

Die Haltevorrichtung 2 weist ein Sockelteil 14 auf, welches in eine insbesondere kreisförmige Montageöffnung eines in Fig. 1 nur angedeuteten Kfz-Karosserieblechteils 16 axial, d.h. in Richtung der Öffnungsachse der Montageöffnung, einsetzbar ist. Das Sockelteil 14 besitzt eine obere Basisplatte 18, an die sich einstückig ein hohlzylindrisches, sich in Richtung einer Längsachse 20 senkrecht zur Basisplatte 18 erstreckendes Gehäuseteil 22 anschließt. Dabei erstreckt sich die insbesondere kreisförmige Basisplatte 18 in radialer Richtung derart über den äußeren Umfang des Gehäuseteils 22 nach außen, daß sie mit ihrem äußeren Umfangsbereich auf der Oberseite eines Öffnungsrandes der Montageöffnung aufliegt, wenn - wie in Fig. 1 dargestellt - das Gehäuseteil 22 durch die Montageöffnung geführt ist. Die Basisplatte 18 weist eine vorzugsweise kreisförmige und zentrische Lageröffnung 26 auf. Im Winkelbereich zwischen dem Gehäuseteil 22 und der Unterseite der Basisplatte 18 ist mindestens ein Ansatz 28 angeordnet. Vorzugsweise sind jedoch zwei einander diametral gegenüberliegende, derartige Ansätze 28 vorhanden. Diese Ansätze 28 greifen in entsprechende Radialausnehmungen der Montageöffnung des Karosserieblechteils 16 ein, wodurch die erfindungsgemäße Haltevorrichtung 2 verdrehfest in der Montageöffnung angeordnet ist.

Unterhalb der Basisplatte 18 ist in dem Gehäuseteil 22 ein Lager 30 angeordnet (siehe auch Fig. 5, 7 und 8). Dieses Lager 30 besitzt eine in Richtung der Lageröffnung 26 der Basisplatte 18 offene, gelenkpfannenartige, konkave, insbesondere halbkugelschalenförmige Lagerfläche 32. Diese Lagerfläche 32 besitzt einen oberen Öffnungsrand, der etwa mit der Lageröffnung 26 der Basisplatte 18 fluchtet, d.h. mit dieser etwa deckungsgleich ist. Das Lager 30 ist gegen Federkraft einer Spiraldruckfeder 34 von der Basisplatte 18 weg nach unten bewegbar gelagert. Im Grund der konkaven Lagerfläche 32 besitzt das Lager 30 eine axiale Durchgangsöffnung 36.

In der konkaven Lagerfläche 32 des Lagers 30 sitzt mit einer entsprechend konvexen Lagerfläche 37 gelenkig eine Lagerkugel 38 (siehe auch Fig. 4 und 6), und zwar vorzugsweise derart, daß sie bereichsweise durch die Lageröffnung 26 hindurch nach oben über die Basisplatte 18 übersteht (Fig. 1). Diese Lagerkugel 38 besitzt ebenfalls eine axiale Durchgangsöffnung 40, die etwa mit der Durchgangsöffnung 36 des Lagers 30 deckungsgleich ist. Im oberen, dem Lager 30 abgekehrten Endbereich der Durchgangsöffnung 40 ist durch eine Erweiterung in der Lagerkugel 38 eine Aufnahmevertiefung 42 gebildet,die derart an den Figurenfuß 8 angepaßt ist, daß der Fuß 8 formschlüssig, d.h. unverrückbar, in dieser Aufnahmevertiefung 42 sitzt. Dabei erstreckt sich die Haltelasche 10 des Fußes 8 axial in die Durchgangsöffnung 40 der Lagerkugel 38 hinein (siehe hierzu Fig. 1, 3 und 4).

Zur Halterung des Fußes 8 in der Aufnahmevertiefung 42 ist eine Figuren-Haltefeder 44 vorgesehen, die einendig durch die Durchgangsöffnungen 36 und 40 des Lagers 30 und der Lagerkugel 38 hindurch mit dem Fuß 8 bzw. dessen Haltelasche 10 verbunden ist und sich anderendig an dem Sockelteil 14 abstützt. Dabei steht diese Haltefeder 44 derart unter Federvorspannung, daß einerseits der Fuß 8 in der Aufnahmevertiefung 42 und hierdurch andererseits auch die Lagerkugel 38 in der Lagerfläche 32 des Lagers 30 gehalten werden. Die Figuren-Haltefeder 44 ist dabei als axial angeordnete Spiralfeder ausgebildet.

Zur Befestigung des Sockelteils 14 in der Montageöffnung des Karosserieblechteils 16 dient ein mit dem Sockelteil 14 verbundenes Arretierteil 46, welches im montierten Zustand in einer Arretierstellung an der Unterseite des Öffnungsrandes der Montageöffnung unter Vorspannung anliegt und so die Basisplatte 18 in Auflage auf dem Montageöffnungsrand hält. Die Ausgestaltung des Arretierteils 46 ist ausführlich in dem eingangs schon erwähnten DE-GM 90 07 030 beschrieben, worauf an dieser Stelle in vollem Umfang Bezug genommen wird.

Vorzugsweise ist die Figuren-Haltefeder 44 als Spiral-Druckfeder ausgebildet. Die Haltefeder 44 ist hierbei mit ihrem oberen, der Basisplatte 18 zugekehrten Ende an dem Sockelteil 14 abgestützt sowie mit ihrem gegenüberliegenden, unteren Ende mit dem Figurenfuß 8 verbunden (siehe Fig. 1). Hierbei ist es besonders vorteilhaft, wenn das untere Ende der Haltefeder 44 über einen einstückigen Federdrahtabschnitt 50 mit dem Figurenfuß 8 verbunden ist, wobei dieser Federdrahtabschnitt 50 ausgehend von dem unteren Federende derart umgebogen ist, daß er sich geradlinig, axial durch die Haltefeder 44 hindurch nach oben erstreckt. Am Ende des Federdrahtabschnittes 50 ist ein Haken gebildet, der in die Queröffnung 12 der Haltelasche 10 des Fußes 8 eingreift. Das obere Ende der Haltefeder 44 ist vorzugsweise - wie in Fig.1 dargestellt - mittelbar über das Lager 30 an dem Sockelteil 14 abgestützt, wobei sich das Lager 30 ja seinerseits an der Basisplatte 18 abstützt. Es ist weiterhin vorteilhaft, wenn das Lager 30 einen seine Durchgangsöffnung 36 umschließenden, sich axial nach unten erstreckenden Ringsteg 52 aufweist (siehe Fig. 5 und 7), dessen Außendurchmesser etwa dem inneren Windungsdurchmesser der Haltefeder 44 entspricht. Die Haltefeder 44 liegt hierbei mit ihrem oberen Ende den Ringsteg 52 umschließend an der Unterseite des Lagers 30 an (Fig. 1). Hierdurch wird vorteilhafterweise eine Zentrierung der Haltefeder 44 im Bereich ihres oberen Endes erreicht.

Das Lager 30 ist in axialer Richtung gegen Federkraft gänzlich frei nach unten bewegbar, dabei jedoch vorteilhafterweise gegen Verdrehen um die Längsachse 20 fixiert in dem Sockelteil 14 geführt. Zur Führung des Lagers 30 besitzt das Gehäuseteil 22 auf seiner inneren Umfangsfläche mindestens eine, vorzugsweise jedoch zwei einander diametral gegenüberliegende, axial verlaufende Führungsnuten (in der Zeichnung nicht erkennbar). Weiterhin weist das Lager 30 vorzugsweise zwei einander diametral gegenüberliegende, radiale, nach außen ragende Führungsstege 54 auf, die in axialer Richtung verschiebbar in den Führungsnuten des Gehäuseteils 22 geführt sind. Die Führungsstege 54 sind am besten in den Fig. 7 und 8 zu erkennen.

Wie weiterhin noch in Fig. 1 zu erkennen ist, ist die das Lager 30 beaufschlagende Spiraldruckfeder 34 zwischen einem sich radial nach außen erstreckenden Ringsteg 56 des Lagers 30 (siehe auch Fig. 5 und 8) und einem in dem Gehäuseteil 22 gehaltenen Druckring 58 unter Vorspannung angeordnet. Dabei umschließt die Spiraldruckfeder 34 die Figuren-Haltefeder 44 koaxial mit radialem Abstand. Der Druckring 58 besteht aus einem ringscheibenförmigen, sich radial nach außen erstreckenden Ringteil 60, der sich an einem in einer inneren Ringnut des Gehäuseteils 22 sitzenden Seegerring 62 abstützt, sowie aus einem sich axial erstreckenden, hohlzylindrischen Ringteil 64, der die Figuren-Haltefeder 44 koaxial mit geringem Spiel umschließt. Hierdurch wird vorteilhafterweise eine Zentrierung der Haltefeder 44 erreicht, und zwar wird die Haltefeder 44, deren unteres Ende ja aufgrund der oben beschriebenen Ausgestaltung "frei" ist, in ihrem mittleren bis unteren Bereich zur Längsachse 20 zentrisch gehalten und geführt, wie dies in Fig. 1 gut zu erkennen ist.

Die Lagerkugel 38 und das Lager 30 weisen zur Gewährleistung einer Grund- bzw. Vorzugsstellung der Kühlerfigur 1 (in Fig. 1 mit durchgezogenen Linien eingezeichnet) im Bereich ihrer Lagerflächen 37, 32 Rastmittel 70 auf. Auf die Ausgestaltung dieser Rastmittel 70 bezieht sich die vorliegende Erfindung, wie es nun im folgenden genauer erläutert werden soll.

Erfindungsgemäß bestehen die Rastmittel 70 zumindest aus einem Rastnocken 72, der sich ausgehend von der Lagerfläche 37 der Lagerkugel 38 im wesentlichen parallel zur Längsachse 20 nach unten, d.h. in Richtung des Lagers 30, erstreckt. Wie sich aus Fig. 4 ergibt, liegt der Rastnocken 72 etwa im Bereich einer Winkelhalbierenden zwischen der Längsachse 20 und einer sich zu dieser senkrecht und mittig durch die Lagerkugel 38 erstreckenden Querachse 74. Als Rastmittel 70 ist weiterhin zumindest eine mit dem Rastnocken 72 zusammenwirkende, in der Lagerfläche 32 des Lagers 30 gebildete Rastvertiefung 76 vorgesehen. Hierbei sind der Rastnocken 72 und die Rastvertiefung 76 erfindungsgemäß mittig zu einer - bezogen auf die Einbaulage des Sockelteils 14 bzw. der Haltevorrichtung 2 in einem Fahrzeug - in Fahrzeuglängsrichtung sowie vertikal verlaufenden Längsmittelebene 78 (siehe Fig. 6 bis 8) sowie im in Fahrtrichtung des Fahrzeugs weisenden, vorderen Bereich des Lagers 30 und der Lagerkugel 38 angeordnet (siehe Fig. 4 und 5). Die Rastvertiefung 76 weist beidseitig der Längsmittelebene 78 einander gegenüberliegende, etwa parallel zur Längsmittelebene 78 verlaufende Führungsflächen 80 für den Rastnocken 72 auf (siehe hierzu insbesondere Fig. 5, 7 und 8). Dabei besitzen der Rastnocken 72 und die Rastvertiefung 76 jeweils eine aneinander angepaßte, senkrecht zur Längsmittelebene 78 gemessene Breite B, die mindestens gleich der Hälfte des Radius R der Lagerflächen 32, 37 ist. Vorzugsweise beträgt die Breite B das 0,6- bis 1-fache, insbesondere das 0,8-fache, des Radius' R. Durch diese erfindungsgemäße Ausgestaltung wird vorteilhafterweise die Flächenpressung des Rastnockens 72 in der Rastvertiefung 76 gering gehalten, so daß auch nur ein geringfügiger Verschleiß in diesem Bereich auftreten kann. Wie eingangs bereits erläutert wurde, wird durch die beschriebene Ausbildung der Rastvertiefung 76 mit den Führungsflächen 80 eine derartige Führung des Rastnockens 72 erreicht, daß bei einem Kippen der Kühlerfigur 1 nach hinten (siehe die Pfeilrichtung X in Fig.1) ein gleichzeitiges Verdrehen der Kühlerfigur 1 nahezu ausgeschlossen ist.

Wie sich aus Fig. 4 ergibt, besitzt der Rastnocken 72 der Lagerkugel 38 eine in Fahrtrichtung des Fahrzeugs nach vorne weisende, parallel zur Längsachse 20 verlaufende Anlagefläche 82. Diese Anlagefläche 82 liegt in der Vorzugsstellung der Kühlerfigur 1 - siehe Fig. 1 - an einer Gegenfläche 84 der Rastvertiefung 76 des Lagers 30 an. Die Gegenfläche 84 ist am besten in Fig. 5 zu erkennen. Die Gegenfläche 84 geht in ihrem der Kühlerfigur 1 zugekehrten, oberen Bereich über eine quer zur Längsmittelebene 78 verlaufende Rastkante 86 in die konkave Lagerfläche 32 über (siehe hierzu insbesondere Fig. 5, 7 und 8). Ferner besitzt der Rastnocken 72 der Lagerkugel 38 an seinem dem Lager 30 zugekehrten, unteren Ende eine sich an die Anlagefläche 82 anschließende, vorzugsweise abgerundete Endkante 88. Diese Endkante 88 wirkt erfindungsgemaß bei einem Verschwenken der Kühlerfigur 1 in Richtung der Längsmittelebene 78 nach hinten (Pfeil X in Fig. 1) rastend mit der Rastkante 86 des Lagers 30 zusammen. Dies bedeutet, daß bei dem Verschwenken der Kühlerfigur 1 der Rastnocken 72 aus der Rastvertiefung 76 "ausgehebelt" wird, bis er mit seiner Endkante 88 die Rastkante 86 rastend "überwindet". Hierbei kann vorteilhafterweise durch Ausgestaltung der Konturen der Rastkante 86 und der Endkante 88 eine Einstellung der zum Kippen der Kühlerfigur 1 erforderlichen Kippkraft vorgenommen werden.

In diesem Zusammenhang ist es vorteilhaft, wenn sich der Rastnocken 72 in zu der Lagerkugel 38 radialer Richtung um etwa 1/5 des Radius' R der Lagerfläche 37 der Lagerkugel 38 von dieser weg erstreckt.

In der dargestellten, bevorzugten Ausführungsform der Erfindung besitzt die Lagerkugel 38 als Rastmittel 70 zwei zusätzliche, vorzugsweise zur Längsmittelebene 78 symmetrisch angeordnete Rastansätze 90, die mit entsprechenden Rastvertiefungen 92 des Lagers 30 zusammenwirken. Durch diese vorteilhafte Ausgestaltung wird in jeder aus der Vorzugsstellung heraus verschwenkten Stellung der Kühlerfigur 1 eine Dreipunktauflage der Lagerkugel 38 in dem Lager 30 bewirkt.

Im Zusammenhang mit den erfindungsgemäßen Rastmitteln 70 ist es besonders vorteilhaft, das Lager 30 aus einem elastisch verformbaren Kunststoff herzustellen. Besonders geeignet hierfür ist faserverstärktes Polyamid, wie insbesondere PA6-GF30. Dieses Material ist äußerst gängig und gewährleistet in Verbindung mit der erfindungsgemäßen Ausgestaltung der Rastmittel 70 - bei einer anfänglichen Kippkraft von 30 N - nach 50-maligem Kippen noch eine Kippkraft von 18 N. Ein weiteres geeignetes Material ist PA6-MoS₂, da hiermit nach 50-maligem Kippen sogar eine Kippkraft von noch 20 N gewährleistet werden kann.

Hierzu ist noch darauf hinzuweisen, daß aufgrund der innerhalb der erfindungsgemäßen Haltevorrichtung vorliegenden Hebelverhältnisse (14:1) beim Kippen der Kühlerfigur 1 mit einer Kippkraft von 30 N auf den Rastnocken 72 eine Kraft von ca. 420 N wirkt. Diese hohe Kraft kann nun aber vorteilhafterweise keine Beschädigungen und auch nur einen sehr geringfügigen Verschleiß verursachen, weil vorteilhafterweise das Material des Lagers 30 elastisch "ausweichen" kann.

## Patentansprüche

1. Haltevorrichtung mit einer Kühlerfigur (1) zur Montage in einer Montageöffnung eines Karosserieblechteils (16), bestehend aus einem in die Montageöffnung einsetzbaren Sockelteil (14), einem innerhalb des Sockelteils (14) angeordneten Lager (30) mit einer gelenkpfannenartigen, konkaven Lagerfläche (32), sowie aus einer mit der Kühlerfigur (1) verbundenen, gelenkig mit einer konvexen Lagerfläche (37) in der Lagerfläche (37) des Lagers (30) sitzenden und durch Federkraft in dem Lager (30) gehaltenen Lagerkugel (38), wobei zur Gewährleistung einer Vorzugsstellung der Kühlerfigur (1) die Lagerkugel (38) und das Lager im Bereich ihrer Lagerflächen (32,37) Rastmittel (70) aufweisen, die zumindest aus einem Rastnocken (72) der einen Lagerfläche und einer mit dem Rastnocken (72) zusammenwirkenden Rastvertiefung (76) der anderen Lagerfläche bestehen, wobei der Rastnocken (72) und die Rastvertiefung (76) mittig zu einer - bezogen auf die Einbaulage des Sockelteils (14) in einem Fahrzeug - in Fahrzeuglängsrichtung und vertikal verlaufenden Längsmittelebene (78) angeordnet sind,
**dadurch gekennzeichnet,** daß der Rastnocken (72) und die Rastvertiefung (76) im in Fahrtrichtung des Fahrzeugs weisenden, vorderen Bereich des Lagers (30) und der Lagerkugel (38) angeordnet sind, wobei der Rastnocken (72) von der Lagerfläche (37) der Lagerkugel (38) vorspringt und die Rastvertiefung (76) in der Lagerfläche (32) des Lagers (3) gebildet ist, und wobei die Rastvertiefung (76) beidseitig der Längsmittelebene (78) einander gegenüberliegende Führungsflächen (80) für den Rastnocken (72) derart aufweist, daß während eines Verschwenkens der Kühlerfigur (1) entgegen der Fahrtrichtung nach hinten einem gleichzeitigen Verdrehen der Kühlerfigur (1) entgegengewirkt wird.

2. Haltevorrichtung nach Anspruch 1,
**dadurch gekennzeichnet**, daß die senkrecht zur Längsmittelebene (78) gemessene Breite (B) des Rastnockens (72) und der Rastvertiefung (76) mindestens gleich der Hälfte des Radius (R) der Lagerflächen (32, 37) ist und vorzugsweise das 0,6- bis 1-fache, insbesondere das 0,8-fache, des Radius' (R) beträgt.

3. Haltevorrichtung nach Anspruch 1 oder 2,
**dadurch gekennzeichnet**, daß der Rastnocken (72) der Lagerkugel (38) eine in Fahrtrichtung des Fahrzeugs nach vorne weisende, parallel zu einer Längsachse (20) des Sockelteils (14) verlaufende Anlagefläche (82) aufweist, die in der Vorzugsstellung an einer Gegenfläche (84) der Rastvertiefung (76) des Lagers (30) anliegt.

4. Haltevorrichtung nach Anspruch 3,
**dadurch gekennzeichnet**, daß die Gegenfläche (84) der Rastvertiefung (76) in ihrem der Kühlerfigur (1) zugekehrten, oberen Bereich über eine quer zur Längsmittelebene (78) verlaufende Rastkante (86) in die konkave Lagerfläche (32) übergeht.

5. Haltevorrichtung nach Anspruch 3 oder 4,
**dadurch gekennzeichnet**, daß sich an die Anlagefläche (82) des Rastnockens (72) an dessen dem Lager (30) zugekehrten, unteren Ende eine vorzugsweise abgerundete, bei einem Verschwenken der Kühlerfigur (1) rastend mit der Rastkante (86) des Lagers (30) zusammenwirkende Endkante (88) anschließt.

6. Haltevorrichtung nach einem oder mehreren der Ansprüche 1 bis 5,
**dadurch gekennzeichnet**, daß sich der Rastnocken (72) der Lagerkugel (38) in zu dieser radialer Richtung um etwa 1/5 des Radius (R) der Lagerfläche (37) der Lagerkugel (38) von dieser weg erstreckt.

7. Haltevorrichtung nach einem oder mehreren der Ansprüche 1 bis 6,
**dadurch gekennzeichnet**, daß das Lager (30) aus einem elastisch verformbaren Kunststoff, insbesondere aus faserverstärktem Polyamid, besteht.

8. Haltevorrichtung nach einem oder mehreren der Ansprüche 1 bis 7,
**dadurch gekennzeichnet**, daß die Lagerkugel (38) als Rastmittel (70) zwei zusätzliche, vorzugsweise zur Längsmittelebene (78) symmetrisch angeordnete Rastansätze (90) aufweist, die mit entsprechenden Rastvertiefungen (92) des Lagers (30) zusammenwirken.

## Claims

1. Holding apparatus having a radiator mascot (1) for mounting in a mounting opening of a sheet-metal bodywork part (16), comprising a socket part (14) which can be inserted into the mounting opening, a bearing (30) arranged within the socket part (14) and having a concave bearing surface (32) in the manner of a joint socket, and comprising a bearing ball (38) which is connected to the radiator mascot (1), is seated in articulated manner by a convex bearing surface (37) in the bearing surface (37) of the bearing (30) and is held in the bearing (30) by spring force, the bearing ball (38) and the bearing having latching means (70) in the region of their bearing surfaces (32, 37) to ensure a preferred position of the radiator mascot, the latching means (70) comprising, at least, a latching cam (72) of the one bearing surface and a latching depression (76), cooperating with the latching cam (72), of the other bearing surface, the latching cam (72) and the latching depression (76) being arranged centrally with respect to a longitudinal centre plane (78) running vertically and in the longitudinal direction of the vehicle - in relation to the position of installation of the socket part (14) in a vehicle - characterized in that the latching cam (72) and the latching depression (76) are arranged in the front region, pointing in the direction of travel of the vehicle, of the bearing (30) and the bearing ball (38), the latching cam (72) projecting from the bearing surface (37) of the bearing ball (38) and the latching depression (76) being formed in the bearing surface (32) of the bearing (3), and the latching depression (76) having on either side of the longitudinal centre plane (78) mutually opposing guide surfaces (80) for the latching cam (72) such that during pivoting of the radiator mascot (1) in opposition to the direction of travel to the rear a simultaneous rotation of the radiator mascot (1) is countered.

2. Holding apparatus according to Claim 1, characterized in that the width (B) of the latching cam (72) and the latching depression (76), measured perpendicular to the longitudinal centre plane (78), is at least equal to half the radius (R) of the bearing surfaces (32, 37) and is preferably 0.6 to 1 times, in particular 0.8 times, the radius (R).

3. Holding apparatus according to Claim 1 or 2, characterized in that the latching cam (72) of the bearing ball (38) has a bearing surface (82) pointing forwards in the direction of travel of the vehicle and running parallel to a longitudinal axis (20) of the socket part (14), this bearing surface (82) in the preferred position bearing against a counter-surface (84) of the latching depression (76) of the bearing (30).

4. Holding apparatus according to Claim 3, characterized in that the counter-surface (84) of the latching depression (76) merges in its upper region facing the radiator mascot (1) into the concave bearing surface (32) by way of a latching edge (86) running transversely to the longitudinal centre plane (78).

5. Holding apparatus according to Claim 3 or 4, characterized in that the bearing surface (82) of the latching cam (72) is adjoined at its lower end facing the bearing (30) by a preferably rounded end edge (88) which cooperates in latching manner with the latching edge (86) of the bearing (30) when the radiator mascot (1) pivots.

6. Holding apparatus according to one or more of Claims 1 to 5, characterized in that the latching cam (72) of the bearing ball (38) extends in a radial direction with respect to the latter by approximately 1/5 of the radius (R) of the bearing surface (37) of the bearing ball (38), away from the latter.

7. Holding apparatus according to one or more of Claims 1 to 6, characterized in that the bearing (30) is made of a resiliently deformable plastics material, in particular fibre-reinforced polyamide.

8. Holding apparatus according to one or more of Claims 1 o 7, characterized in that the bearing ball (38) has, as latching means (70), two additional latching attachments (90) which are preferably arranged symmetrically with respect to the longitudinal centre plane (78) and which cooperate with corresponding latching depressions (92) in the bearing (30).

## Revendications

1. Dispositif de maintien comportant une figure de calandre (1), destinée à être montée dans une ouverture de montage d'un élément de carosserie en tôle (16), consistant en une partie socle (14) pouvant être insérée dans l'ouverture de montage, un palier (30) disposé à l'intérieur de la partie socle (14) et présentant une surface d'appui (32) concave semblable à une cavité articulaire, ainsi qu'une boule-coussinet (38) articulée par une surface convexe (37) dans la surface d'appui (32) du palier (30) et retenue dans celui-ci par une force élastique, la boule-coussinet (38) et le palier comportant, pour maintenir la figure de calandre (1) dans une position préférée, des moyens d'arrêt (70) dans la région de leurs faces d'appui (32, 37), lesdits moyens d'arrêt (70) étant formés au moins par un ergot d'arrêt (72) de l'une des faces d'appui, et par un évidement d'arrêt (76) de l'autre face d'appui, coopérant avec l'ergot d'arrêt (72), l'ergot (72) et l'évidement (76) d'arrêt étant disposés centralement par rapport à un plan longitudinal central (78) et vertical relativement à la position de montage de la partie socle (14) dans un véhicule, caractérisé en ce que l'ergot (72) et l'évidement (76) d'arrêt sont disposés dans la partie antérieure, dans la direction de circulation du véhicule, du palier (30) et de la boule-coussinet (38), l'ergot d'arrêt (72) faisant saillie de la surface d'appui (37) de la boule-coussinet (38), et l'évidement d'arrêt (76) étant formé dans la surface d'appui (32) du palier (30), l'évidement d'arrêt (76) présentant de part et d'autre du plan central longitudinal (78) des surfaces de guidage (80) de l'ergot d'arrêt (72), de manière à contrecarrer une torsion simultanée de la figure de calandre (1) lors d'un pivotement vers l'arrière de celle-ci à l'encontre de la direction de circulation.

2. Dispositif de maintien selon la revendication 1,
caractérisé en ce que la largeur (B), mesurée perpendiculairement par rapport au plan central longitudinal (78) de l'ergot (72) et de l'évidement (76) d'arrêt, est au moins la moitié du rayon (R) des surfaces d'appui (32, 37) et de préférence égale à O,6 à 1 fois ce rayon, en particulier égal à 0,8 fois le rayon (R).

3. Dispositif de maintien selon la revendication 1 ou 2,
caractérisé en ce que l'ergot d'arrêt (72) de la boule-coussinet (38) présente une surface d'application (82) orientée vers l'avant dans la direction de circulation du véhicule et s'étendant parallèlement à un axe longitudinal (20) de la partie socle (14), cette face (82) étant appliquée, dans la position préférée, sur une face opposée (84) de l'évidement d'arrêt (76) du palier (30).

4. Dispositif de maintien selon la revendication 3,
caractérisé en ce que la face opposée (84) de l'évidement d'arrêt (76) est prolongée dans sa région supérieure en regard de la figure de calandre (1), par une face d'appui concave (32), via un bord d'arrêt (86) s'étendant transversalement par rapport au plan central longitudinal (78).

5. Dispositif de maintien selon la revendication 3 ou 4,
caractérisé en ce que l'extrémité inférieure en regard du palier (30) de la face d'application (82) de l'ergot d'arrêt (72) est suivie d'un bord terminal (88), de préférence arrondi, coopérant de manière verrouillable avec le bord d'arrêt (86) du palier (30) lors d'un pivotement de la figure de calandre (1).

6. Dispositif de maintien selon l'une ou plusieurs des revendications 1 à 5,
caractérisé en ce que l'ergot d'arrêt (72) de la boule-coussinet (38) s'étend dans une direction radiale par rapport à celle-ci d'une valeur d'un cinquième environ du rayon (R) de la face d'appui (37) de la boule-coussinet (38), dans une direction opposée à celle-ci.

7. Dispositif de maintien selon l'une ou plusieurs des revendications 1 à 6,
caractérisé en ce que le palier (30) est réalisé en une matière synthétique élastiquement déformable, en particulier en un polyamide renforce par fibres.

8. Dispositif de maintien selon l'une ou plusieurs des revendications 1 à 7,
caractérisé en ce que la boule-coussinet (38) présente, en tant que moyens d'arrêt (70), deux appendices d'arrêt supplémentaires (90), disposés de préférence symétriquement par rapport au plan longitudinal central (78), ces appendices coopérant avec des évidements d'arrêt corrspondants (92) du palier (30).
